(19)

**Europäisches Patentamt**
**European Patent Office**
**Office européen des brevets**

(11) **EP 2 493 130 B1**

(12) **EUROPEAN PATENT SPECIFICATION**

(45) Date of publication and mention
of the grant of the patent:
**05.06.2013 Bulletin 2013/23**

(51) Int Cl.:
***H04L 12/801*** *(2013.01)*

(21) Application number: **11001455.2**

(22) Date of filing: **22.02.2011**

(54) **Method of controlling a packet transmission**

Verfahren zur Steuerung einer Paketübertragung

Procédé pour le contrôle de la transmission de paquets

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**29.08.2012 Bulletin 2012/35**

(73) Proprietor: **Alcatel Lucent**
**75007 Paris (FR)**

(72) Inventors:
• **Lautenschlaeger, Wolfram**
**74343 Sachsenheim (DE)**
• **Gebhard, Ulrich**
**71643 Ludwigsburg (DE)**

(74) Representative: **Wetzel, Emmanuelle**
**Alcatel Lucent**
**Intellectual Property & Standards**
**70430 Stuttgart (DE)**

(56) References cited:
**US-A1- 2009 296 670**

• **LAUTENSCHLAGER W ET AL: "Bandwidth
Dimensioning in Packet-based Aggregation
Networks", TELECOMMUNICATIONS NETWORK
STRATEGY AND PLANNING SYMPOSIUM, 2008.
NETWORKS 2008. THE 13TH INTERNATIONAL,
IEEE, PISCATAWAY, NJ, USA, 28 September 2008
(2008-09-28), pages 1-8, XP031465429, ISBN:
978-963-8111-68-5**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

Field of Invention

The present invention relates to a method of controlling a packet transmission, and a sender and a computer program product to execute said method.

Background of the Invention

Packet transmission in packet-based networks requires interfaces and routers, which are powered by electric energy and often require cooling. With increasing traffic load these factors considerably contribute to the operational expenditure of a network operator. Consequently there is a growing need to reduce power consumption in communication networks.

US2009/0296670 concerns a network in which a source selects a bit rate according to the status (measure of fullness) of the packet buffer at the source. In general, if the number of packets in the buffer at the source lies between a first (lower bound) threshold and a second (upper bound) threshold, then the source transmits packets at a first bit rate. If the number of packets in the buffer decreases to less than the first threshold, then the source transmits packets at a bit rate that is greater than the first bit rate. If the number of packets in the buffer increases to more than the second threshold, then the source transmits packets at a bit rate that is less than the first bit rate.

Summary of the Invention

The object of the present invention is to provide an improved packet transmission.

The object of the present invention is achieved by a method of controlling a packet transmission in a packet switched network according to claim 1. The object of the present invention is further achieved by a sender of a packet switched network according to claim 9. And the object of the present invention is achieved by a computer program product for controlling a packet transmission in a packet switched network according to claim 10.

The prediction of the future traffic offer is preferably based on a sliding observation of the past traffic arrival. It is assumed that the mean traffic load during an observation period is approximately equal to the mean traffic load in an immediately following prediction period of a similar length as the observation period. And it is further assumed that the traffic fluctuations around the mean during the observation period will continue at the same extent during the immediately following prediction period. In general purpose packet networks observation and prediction period could be in the range of seconds up to minutes, preferably 5 minutes to 15 minutes. Both observation and prediction period are not necessarily equal but in a similar time range, which is subsumed in the term "prediction time scale". Furthermore mean traffic load and the fluctuations around the mean traffic load are not necessarily separately quantified, which is subsumed in the term "traffic offer".

A traffic offer is offered to the sender. The traffic offer consists of the mean traffic load and the traffic fluctuations around the mean traffic load. The transmission bit rate must be so high that the traffic offer is fully transmitted through the link.

The transmission bit rate used by the sender is closely related to a clock rate of the sender. The terms "clock rate" and "transmission bit rate" are therefore used interchangeably in this description.

Providing a link for transmission of the packet traffic, the sender possesses a certain transmission capacity B. If the sender is a router or a switch, the transmission capacity of the sender is limited by the rate at which the packets are routed or switched through the router or switch, respectively. If the volume of the packet traffic is zero, the load of the link provided by the sender, i.e. the link load, is also at zero, i.e. at its minimum. If the volume of the packet traffic is equal to the transmission capacity, the normalized link load is one, i.e. it is at its maximum. If the volume of the packet traffic is greater than the transmission capacity, the link load is greater than 1, i.e. the sender is overloaded and there is "overshooting" traffic.

The present invention exploits the fact that usage of transmission links in a packet based network is not constant over time. The mean number of hits of a web page on the Internet, for instance, may differ significantly on a working day and a non-working day. These network usage patterns usually have a relatively reliable main component, indicating a mean load trend. Taking into account this predictable mean load trend, a network operator is able to limit in advance the provisioning of network resources to an amount which will be actually used at a certain point of time in the future. This economic provisioning of network resources saves energy and costs.

The actual traffic load, however, also contains an unpredictable component, i.e. fluctuations which are superimposed over the mean load trend. Typical packet traffic load is randomly changing. Furthermore, load changes just happen, since packet forwarding is connectionless. Connections are not declared as such nor is there any admission control to announce the load changes. If a network operator wants to avoid that overshooting traffic exceeds the capacity of provisioned network resources, the provisioning of network resources must properly take into account this unpredictably fluctuating component of traffic load. Therefore the network operator is forced to provide a safety margin which must never be too small, even if it later becomes apparent that only a small amount of the safety margin is actually used.

The present invention faces the problem of the varying traffic load and proposes a solution which comprises a prediction of the traffic load and an adaptation of the transmission bit rate to the predicted traffic load.

The transmission bit rate is a significant network resource. There is a direct relationship between the clock rate of a processor and its power consumption. Today's large Internet routers have a power consumption in the order of several kW. A typical power consumption value for a single state-of-the-art Gigabit Ethernet line card is approximately 150 W. Routers with Ethernet connections to many neighbour routers need many of these interfaces and generate high energy and cooling cost while their interfaces are often underutilized. Thus energy is a large part of a network operator's operational expenditure. According to the invention an adaptation of a transmission bit rate used on a packet transmission link to the actual load conditions is performed. This has the benefit of a reduced power consumption during periods of low traffic. Embodiments of the invention reduce the power consumption of Ethernet interfaces, preferably of Gigabit Ethernet interfaces, in IP routers; the term "Gigabit Ethernet interface" is used here for Ethernet interfaces with a rate of 1 Gbps or above (bps = bits per second). This reduced energy consumption means a significant contribution to conserving the environment and valuable cost savings for the operators.

However the transmission bit rate cannot be changed at once. The synchronization of the clock and data recovery (= CDR) at the receiving side of a connection has to keep track with the changing transmission clock. This implies a limited slope for the transmission rate adaptation. In a typical embodiment of the invention the transmission rate varies between 30% and 100% of the normal link capacity.

According to embodiments of the invention, the clock rate at which Ethernet line cards process and transmit packets is not static but controlled by an algorithm which estimates the traffic load to be expected and adapts the clock rate to the expected traffic load situation. The proposed solution is auto-adaptive.

Although clock throttling is a known power saving technology in chip design, the application of clock throttling to whole transmission links faces the synchronization problem: whenever a sending system decides to change the link bit rate, the receiving side has to adapt its own clock accordingly. Abrupt clock switching, e.g. by announcement from sender to the receiver, results in an out-of-service period for re-synchronization, which is not acceptable for high bit rate core network links. Embodiments of the invention provide a load controlled Ethernet rate adaptation which avoids an out-of-service period for re-synchronization and uninterruptedly maintains a synchronisation state between the sender and the receiver. Unlike the aforementioned known solutions of rate adaptation, e.g. switching a chip clock from one frequency to another, which may lead to service interruption due to the fact that the receiver needs some time to synchronize on the changed sender clock, embodiments of the invention maintain synchronization state during the rate adaptation process by allowing only smooth changes to the transmission bit rate which are within the holding range of the clock recovery at the receiver's end.

In a particular implementation the change of the transmission bit rate so that the clock recovery of the receiver remains phase-locked to the changing transmission rate can be done by a specially dimensioned PLL in the clock recovery of the receiver. For this invention it is preferred to have a PLL with a large holding range within which the receiver can follow the input signal without losing synchronisation. PLLs with large holding ranges are unusual in wired networks, however, they are state-of-the-art in radio technologies (RF). Typical wide holding range PLLs incorporate an integrating loop filter, (e.g. charge pump loop filter). With an integrating loop filter the phase error converges to zero at any constant input frequency, whereas the phase error converges to a non zero value at constant change rate of the input frequency. If the phase error exceeds the operational range of the particular phase discriminator in the receiving PLL, the phase lock gets lost and the system loses its synchronisation. It is a question of proper dimensioning where the maximum change rate of the senders transmission speed results in a phase error of the receiving PLL that remains well within the operating range. It is preferred to provide a safety margin of at least one order of magnitude.

In contrast to known solutions aimed at making network usage more efficient, e.g. whereby traffic is detoured and concentrated on fewer links so that fewer interfaces need to be active and others can be switched off, which are static approaches which cannot react on changes of the network load situation and may require that traffic passes additional hops, embodiments of the invention avoid the disadvantages of these known solutions.

Embodiments of the invention are transparent to any higher layer protocol using the present rate-adapted method, preferably as an Ethernet service. Therefore an implementation of the invention inter-works with all existing client layers.

Further advantages are achieved by embodiments of the invention indicated by the dependent claims.

Embodiments of the invention propose to forecast the traffic load on a time scale that is compatible with the permitted change rate. Based on the forecast, the transmission bit rate is proactively adapted. According to another embodiment of the invention, the method further comprises the step of predicting the traffic load on a time scale which is compatible with the change rate.

Preferably, the forecast is based on a sliding observation of the past, preferably by means of a sliding mode observation. Abrupt changes of the traffic offer move into the observation period in a continuous way. Depending on the forecast method this results in a controlled change rate of the forecast. As a rule, the larger the observation period is, the slower the forecast will change. Traffic changes that are not yet fully reflected by the forecast are regarded as part of the traffic fluctuations. According to an embodiment of the invention, the maximum change rate of the forecast is designed in a way where the permitted adaptation rate of the transmission speed is not exceeded. An observation and forecast period, i.e. a time scale is called compatible, if it results in a slower change rate of the forecast than the permitted adaptation rate of the transmission speed.

These prediction methods to determine the transmission bit rate required can be used alternatively or in combination. One prediction method can be described as an analytical algorithm which makes a prediction by examining the behaviour of packet flows traversing the interface, in the other prediction method the clock rate follows the filling-level of the output buffer feeding it.

According to an embodiment of the invention, predicting the traffic load based on the effective bandwidth estimation comprises estimating an application stream granularity of the packet traffic; measuring a mean traffic load; calculating a volatility of the packet traffic from the mean traffic load and the application stream granularity; based on the volatility, calculating a fluctuation reserve above the means traffic load which is sufficient to cope with unpredictable fluctuations with a probability of 99 %, preferably 99.9 %, more preferably 99.99% and predicting the traffic offer as a sum of the mean traffic load and the fluctuation reserve.

In real networks the volatility of traffic is not infinite, as might be expected due to the connectionless nature of packet forwarding. Quite the contrary, the volatility of aggregated traffic can be calculated from the measurable mean traffic load and the known (see below) application stream granularity of traffic. Based on the volatility, a fluctuation reserve above the mean traffic load is calculated which is sufficient to cope with almost all of the unpredictable fluctuations up to a certain overflow probability, e.g. $10^{-4}$. The value of mean load plus fluctuation reserve is commonly known as Effective Bandwidth, which has been used in the past for static link capacity dimensioning.

The prediction method which addresses the granularity of the packet traffic, which in the following is also referred to as "granularity prediction method", is based on the assumption that aggregated traffic is created by a larger group of independent users. The independence of users implies that the overall mean load, created by the members of the group, but also the way they are creating it, i.e. the typical application stream granularity, will not change suddenly, all at once. The freedom of the particular user, to communicate whatever and whenever he wants, is not affected by this forecast. It is covered by the fluctuation reserve.

To be more specific, the "granularity prediction method" assumes that the packet traffic is multiplexed from a multitude of short lived application streams. As the granularity prediction method is based on an statistical assumption, it works better for a statistically significant number of concurrent application streams. Although a multitude of application streams is involved over the considered time scales, it is to be noted that at a certain point of time only packets of one or a few application streams may be arriving at the sender. The term "short lived" means that a duration of an application stream is finitely long, preferably at least much shorter than a typical service time of a system, e.g. a sender, involved in the transmission control. A particular application stream represents a communication event of an end user application. It is characterised by a bit rate, a size and/or a duration. Application streams are initiated randomly and independently of each other by a statistically significantly large number of end users who are connected to the sender, e.g. via a packet-based aggregation network. A mean number and a mean bit rate of concurrent application streams is referred to as a granularity of the packet traffic, i.e. a number of application streams that have been started but not yet finished at a given moment in time.

In short, application stream granularity is one of the following interchangeable terms: The mean number of independent application streams that constitute a given traffic, A. Alternatively, the mean number of independent application streams that would fit into a given transmission capacity, N. Or, the mean bit rate of application streams themselves, $b_x$. By knowing one of them, the other two can be easily calculated. With m the mean traffic load in bit/s and $B$ the transmission capacity in bit/s one receives:

$$A = \frac{m}{b_x}, \qquad b_x = \frac{m}{A} \qquad\qquad \text{eq.(1 - 5)}$$

$$N = \frac{B}{b_x}, \qquad b_x = \frac{B}{N}$$

finally, the link utilization ratio r:

$$r = \frac{m}{B} = \frac{A}{N}$$

In order to be able to absorb temporary high packet loads, the sender preferably comprises a buffer, i.e. a queue where newly arriving incoming packets are buffered until it is their turn to be processed. If a buffer is full at a given moment in time, an incoming packet cannot be buffered and must be dropped, i.e. the packet is lost. It is therefore essential to adapt the transmission bit rate of the sender to the actual traffic load so that the buffer is never full.

The calculations are started with the assumption of known application stream granularity. This could be the case in a network domain with known access link capacities, where the application stream bit rates $b_x$ would be naturally shaped by the access links. The more general case with unknown application stream bit rate follows below.

According to W. Lautenschlager, W. Frohberg, Bandwidth Dimensioning in Packet-based Aggregation Networks, The 13th International Telecommunications Network Strategy and Planning Symposium 2008 (short: Networks 2008), Budapest 28 September 2008 - 2 October 2008, pp. 1-18, ISBN 978-963-8111-68-5, the volatility of traffic depends basically on the number of concurrent application streams that constitute the actual traffic load. If a given load is created by a large number of narrow application streams then its fluctuation is low. It would require a large number of additional steams (which is unlikely to happen) to overload a particular transmission capacity. In the opposite case, i.e. with a small number of huge application streams, the expected fluctuations are high. Even a single additional application stream could overload a link, which could happen at any time. This effect can be explained mathematically as follows: In a system with randomly arriving concurrent application streams the probability distribution of the actual number of streams (k) follows a Poisson distribution (From the ITU/ITC Teletraffic Engineering Handbook, ITU-D Study Group 2, Question 16/2, Geneva, March 2004, http://www.com.dtu.dk/teletraffic/):

$$P_k = \frac{A^k e^{-A}}{k!} \qquad \text{eq. 6}$$

The probability of a particular packet to belong to a scenario with k active streams is:

$$P_{pkt}(k) = \frac{k \cdot P_k}{\sum k \cdot P_k} = \frac{k \cdot P_k}{A} = P_{k-1}$$

(by taking into account the expectation value of the Poisson distributed random number k: $E[k] = \sum k \cdot P_k = A$ )

If at a given moment the actual number of application streams $k$ exceeds the permitted number $N$, than $(k — N)$ of the offered k application streams get lost. Or more precisely, the conditional probability for a packet to get lost under the condition of k active streams is

$$P(loss|k) = \begin{cases} 0 & k \le N \\ \dfrac{k-N}{k} & k > N \end{cases}$$

Finally one receives for the total loss probability

$$P_{loss} = \sum_{k=0}^{\infty} P\big(loss|k\big) \cdot P_{pkt}\big(k\big)$$

$$P_{loss} = \sum_{k=N+1}^{\infty} \frac{k-N}{k} \cdot P_{k-1}$$

$$P_{loss} = \sum_{k=N+1}^{\infty} \frac{k-N}{k} \cdot \frac{A^{k-1}e^{-A}}{(k-1)!} \qquad\qquad \text{eq. (7)}$$

The equation above is the packet loss probability at given load A and transmission capacity N. It can be numerically resolved in a form of

$$N = f\big(P_{loss}, A\big) \qquad\qquad \text{eq. (8)}$$

which is the necessary capacity N (in number of streams) to carry the traffic load A (in number of streams) at loss rate better than $P_{loss}$. By taking into account the normalizing / de-normalizing relations of eq. 1 - 5 one can translate the result of eq. (8) into an Effective Bandwidth, which is the necessary capacity B to carry the traffic m at an application stream granularity $b_x$.

$$\frac{B}{b_x} = f\left( P_{loss}, \frac{m}{b_x} \right) \qquad\qquad \text{eq. (9)}$$

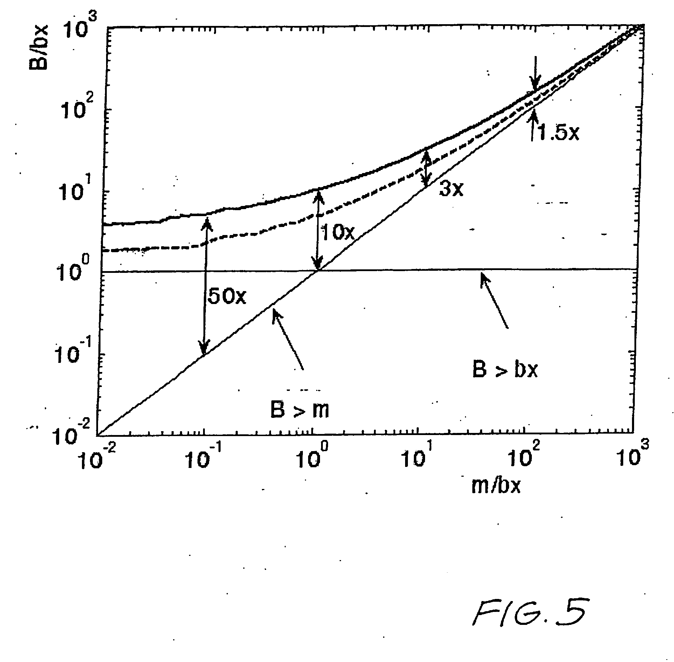

Figure 5 shows a graphical representation of equation (9). In practice the evaluation of equation (9) can be replaced by an interpolation table according to figure 5.

According to an embodiment of the invention it would be sufficient to continuously measure the mean traffic load m and adapt the transmission rate of the system to the resulting Effective Bandwidth $B$ of eq. (9).

In the case of unknown application stream granularity $b_x$ it is proposed to replace its value by an estimation according to following procedure: In a first step one detects the traffic load in short intervals. The interval duration T is preferably in the range of the mean holding times of the buffer in front of the transmission line, particularly in range 1 ms up to 100ms. The traffic load x is then defined and measurable as the cumulative number of bits in all packets that fall into the interval, divided by the interval duration. The traffic load x in a particular interval depends on the actual number of active application streams k:

$$x \cong b_x k$$

The number of active applications streams $k$ is a Poisson distributed random number, cf. eq. (6), with mean $\mu_k$ and variance $v_k$ both equal A, the mean number of active application streams. Correspondingly mean and variance of the random short term load x are:

$$\mu_x = b_x \mu_k = b_x A$$
$$v_x = b_x^2 v_k = b_x^2 A$$

Concluding, the unknown application stream bit rate $b_x$ is given by:

$$b_x = \frac{v_x}{\mu_x}$$

Mean and variance are mathematically defined as expectation values:

$$\mu_x = E[x]$$
$$v_x = E\left[(x - \mu_x)^2\right] = E[x^2] - (E[x])^2$$

In a system with finite application stream durations one can approximately replace the expectation values by averages over time:

$E[x] \cong m$ - the mean traffic load
$E[x^2] \cong m_2$ - the mean square traffic load

As a result of the above one receives an estimation of the unknown application stream bit rate:

$$b_x \cong \frac{m_2 - m^2}{m} \qquad\qquad \text{eq. (10)}$$

The calculation depends solely on the average values $m$ — mean traffic load, and $m_2$ — mean of the square traffic load.

The above described estimation method for the application stream granularity, see equations (10) above, in close combination with the aforementioned method of calculating the Effective Bandwidth by Lautenschlaeger and Frohberg, equation (9), allows the calculation of an Effective Bandwidth, independent of a-priori parameter knowledge, just by observation of the unknown traffic. The method relies not only on the sliding average for the traffic load m, but also on sliding estimation of the application stream granularity $b_x$. This way again, the forecast can be dimensioned in a way, where the maximum slope of the transmission speed adaptation is well observed. The "granularity prediction method" is rather general since it does not rely on the knowledge of the installed base of end user access links. According to another embodiment of the invention, the prediction of the traffic load based on the queue filling level comprises defining a buffer threshold of the output buffer; monitoring the queue filling level; and based on the monitored behaviour of the queue filling level in relation to the buffer threshold, predicting the traffic load.

This method resembles the well-known peak rate detector techniques. In normal operation the output buffer in front of the transmission link, i.e. where packets are buffered before they are transmitted via the transmission link, is nearly empty in average. However, due to the random packet arrival some short spikes of larger buffer filling occur. The frequency and size of those spikes increases if the utilization ratio is drawing to the limit. This effect is used to control the transmission speed of the link. The transmission bit rate is slowly decreased as long as the buffer filling in front of the transmission line does not exceed a given threshold. The transmission bit rate is increased, preferably much faster than the decrease before, whenever the buffer filling exceeds the threshold. The decrease speed should be dimensioned in a decrease range that is slower than the typical fluctuations in the traffic. Preferably the decrease range is several minutes for the decrease, in particular in typical Internet traffic. The increase speed is only limited by the tracking rate of the clock recovery unit of the receiving unit.

According to another embodiment of the invention, the method comprises the step of defining the change rate a) in case the transmission bit rate is higher than the target transmission bit rate, as a negative change rate so that the target transmission bit rate is reached on a time scale which is longer than typical fluctuations of the traffic load, or b) in case the transmission bit rate is lower than the target transmission bit rate, as a positive change rate so that the target transmission bit rate is reached as fast as possible.

It is preferred that in case a) the target transmission bit rate will be reached on a time scale between 1 s and 30 min, preferably between 5 and 15 min.

According to another embodiment of the invention, the determination of the target transmission bit rate takes into account the predicted traffic load and unpredictable fluctuations of the traffic load, whereby the packet transmission at the target transmission bit rate has an overflow probability $P_{ov}$ of lower than 1 %, preferably lower than 0.01 %, more preferably lower than 0.001 %.

Embodiments of the invention propose to maintain a fluctuation reserve above the actual load for unpredictable load changes.

Embodiments of the invention propose to store overshooting traffic in a buffer until the transmission bit rate has ramped up to the target transmission bit rate. According to another embodiment of the invention, the method further comprises the step of storing packet traffic which exceeds the predicted traffic load in an output buffer of the sender until the transmission bit rate has increased to a level which is sufficient to transmit the exceeding packet traffic.

According to another embodiment of the invention, the method comprises that the target transmission bit rate is determined in a range of between 10 % and 100 %, preferably between 30% and 100% of the maximum transmission capacity of the link.

It is preferred that the packet switched network is an Ethernet network, preferably according to standard IEEE 802.3. It is also possible that the packet switched network is a network other than Ethernet. In this case it must be a network where the peering interfaces maintain synchronized state. This excludes asynchronous or burst mode techniques. Another precondition is that the network is elastic, i.e. a receiver has the flexibility to follows a sender's changing clock and does not expect frames, cells or slots arriving in fixed time intervals, that the transmission line is not part of a fixed multiplexing scheme, and that the peering interfaces do not negotiate the transmission speed using a fixed set of standardized values.

Today's networks, however, are dominated by Ethernet and SDH/OTH, other alternatives are of no technological importance. SDH/OTH is based on a hierarchical multiplexing scheme and is therefore not a suitable candidate and other candidates are not in sight.(SDH = Synchronous Digital Hierarchy; OTH = Optical Transport Hierarchy)

It is understood that each of the aforementioned embodiments can also be combined with one or more of the other aforementioned embodiments.

Brief description of the Figures

These as well as further features and advantages of the invention will be better appreciated by reading the following detailed description of exemplary embodiments taken in conjunction with accompanying drawings of which:

Fig. 1 shows a transmission link based on a floating clock domain of sender, link and receiver according to an embodiment of the invention;

Fig. 2 shows a standard mode of operation of a transmission link according to prior art;

Fig. 3 shows a rate adapted mode of operation according to an embodiment of the invention;

Fig. 4 shows (a) a queue filling level over time, and (b) a rate adaptation depending on buffer filling for a buffer filling controlled forecast according to an embodiment of the invention;

Fig. 5 shows an Effective Bandwidth B as function of mean traffic load m, and application stream granularity, represented by application stream bit rate $b_x$, according to an embodiment of the invention;

Fig. 6 shows a prototype measurement of an application stream granularity, and derived thereof the Effective Bandwidth, according to an embodiment of the invention.

Description of Embodiments

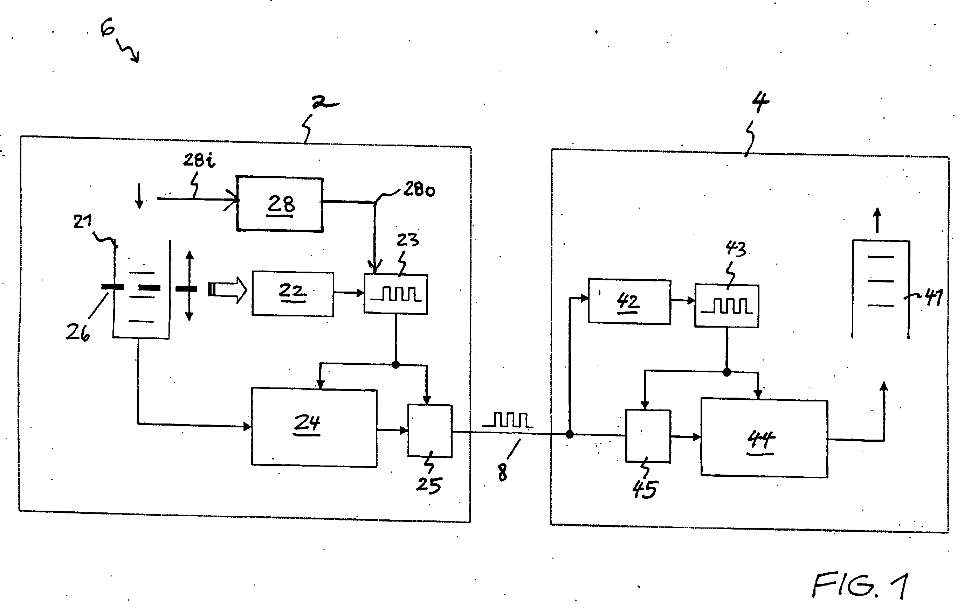

Fig. 1 shows an Ethernet network 6 comprising a sender 2 and a receiver 4 connected by transmission link 8, e.g. a 10 GbE link (GbE = Gigabit Ethernet). Packet traffic from higher layer clients arriving at the sender 2 is buffered into an output buffer 21. A packet in the output buffer 21 is sent to an Ethernet encapsulation and physical layer adaptation unit 24 where the packet is Ethernet-encapsulated and adapted to a physical layer. The process packet is then transmitted to a sending unit 25 of the sender 2. Both the Ethernet encapsulation and physical layer adaptation unit 24 and the sending unit 25 are controlled by a sender clock 23 which controls the operational speed of the units 24 and 25. The sender clock 23 defines the transmission bit rate R at which the sending unit 25 sends the packets via the transmission link 8 to a receiving unit 45 of the receiver 4. The pace of the sender clock 23 is adapted by a rate adaptation unit 22 which is controlled by a filling level of the output buffer 21.

If the filling level of the output buffer 21 is above a buffer threshold 26 the rate adaptation unit 22 increases the speed of the sender clock 23. If the buffer filling level of the output buffer is below the buffer threshold 26 the rate adaptation unit 22 decreases the speed of the sender clock 23. At the receiver 4 the packets arriving via the link 8 are monitored by a clock recovery 42 which controls a receiver clock 43. The receiver clock 43 controls the receiving unit 45 and a physical layer decoding and Ethernet packet processing unit 44 to which the receiving unit forwards the received packets. From the physical layer decoding and Ethernet packet processing unit 44 the processed packets are transmitted into an input buffer 41 from where the packets are sent to higher layer clients.

The sender comprises a control unit 28 which is adapted to predict a traffic offer to the sender 2 on at least one time scale; based on the prediction, determine a target transmission bit rate which is adapted to the predicted traffic offer; and change the transmission bit rate R to the target transmission bit rate at a change rate defined so that a clock recovery 42 of the receiver 4 remains phase-locked to the changing transmission bit rate. The control unit 28 comprises an input link 28i through which the traffic offer is linked to the control unit 28 and an output link 28o to the sender clock 23.

The continuous rate adaptation is in the range of several seconds up to minutes. The receiving side 4 is equipped with a PLL clock recovery circuit 42 which is able to follow the limited rate adaptation speed of the sender 2 (PLL = Phase-Locked Loop). This way synchronization can be maintained during rate changes. No out-of-service periods due to re-synchronization occur. The sender 2, the link 8, and the receiver 4 constitute one synchronous but floating clock domain. The transition to other, fixed clock domains at both sides 2, 4 is done by packet buffers 21, 41 which are present anyway, i.e. they need not be added to an existing transmission link, i.e. sender 2, link 8, and receiver 4, in order to implement the transmission control method in an existing network.

The control unit 28 is composed of one or several inter-linked computers, i.e., a hardware platform, a software platform based on the hardware platform and several application programs executed by the system platform formed by the software and hardware platform. The functionality of the control unit 28 is provided by the execution of these application programs. The application programs or a selected part of these application programs constitute a computer software product providing a transmission control as described in the following, when executed on the system platform. Further, such computer software product is constituted by a storage medium storing these application programs or said selected part of application programs.

Preferably, the control unit 28 is implemented in an existing hardware platform of the sender 2 on which a computer program adapted to execute the method according to the invention is running.

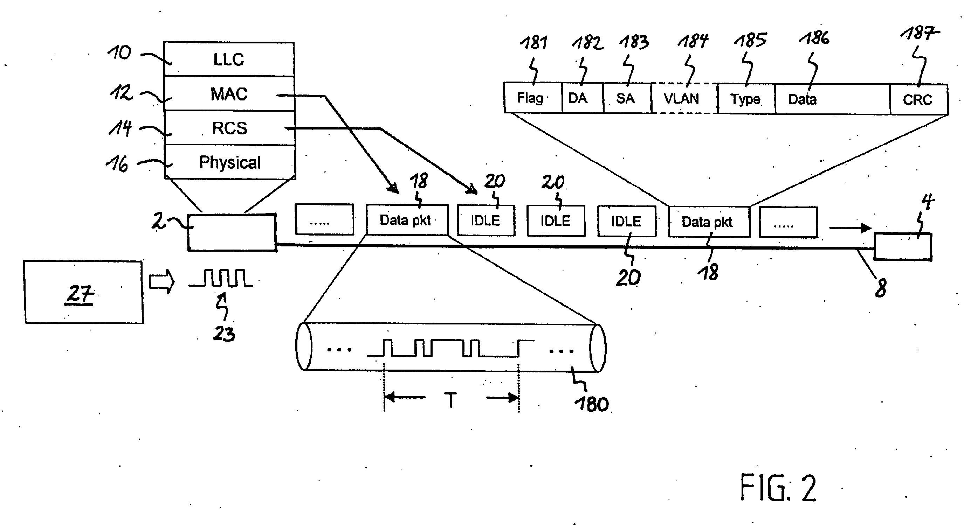

Fig. 2 shows a standard mode of operation of an underutilized Gigabit Ethernet interface. The packets are sent from a sender 2 to a receiver 4 via a transmission link 8. The transmission link 8 may be a 10 GbE link. The transmission bit rate at which the sender sends the packets 18 to the receiver 4 is controlled by a sender clock 23. The sender clock 23 is controlled by a sender clock control 27. The sender sends the packets according to a Gigabit Ethernet protocol stack comprising a LLC layer 10, a MAC layer 12, RCS sub-layer 14 and a physical layer 16 (LLC = Logical Link Control; MAC = Media Access Control; RCS = Reconciliation sub-layer). A data packet 18 sent via the link 8 is comprised of a frame with a flag field 181, a destination address field 182, a source address field 183, a VLAN field 184, a type field 185, a data field 186 and a CRC field 187 (VLAN = Virtual Local Area Network; CRC = Cyclic Redundancy Check). Since the interface between sender 2 and the receiver 4 is underutilized there are less data packets to be transmitted than what would be possible according to the set transmission bit rate. In order to maintain synchronization at the receiver's end 4 the sender's RCS sub-layer 14 inserts idle symbols 20 in the inter-packet gaps which the receiver's RCS sub-layer filters from the data it delivers to its MAC layer. A bit pattern 180 shows that a specific part of the data packet is transmitted during a time period T.

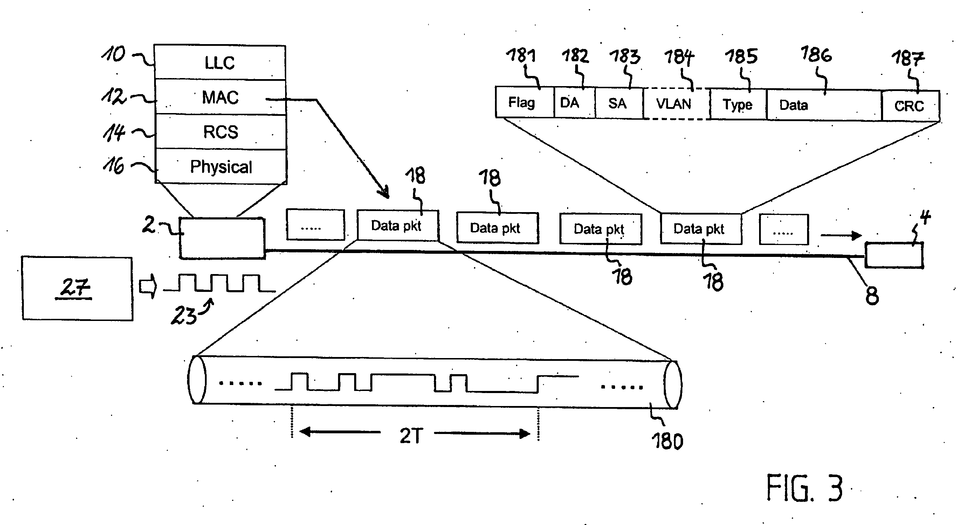

Fig. 3 is very similar to the system shown in Fig. 2 except that the interface of Fig. 3 is in a rate-adapted mode of operation. The Ethernet connection shown in Fig. 3 comprises a transmit clock control 27 which adjusts the clock rate 23 to the current load situation. Fig. 3 shows a situation where approximately 50% of the interface capacity is used. The packet transmission is spread over time so that inter-packet gaps required by the IEEE 802.3 standard disappear and the RCS sub-layer 14 does not need to fill in idle symbols 20 anymore or is able to decrease the number of idle symbols 20 to an amount required due to the fluctuation reserve. As is clear from the bit pattern 180 the bit times in the rate-adapted mode of operation are approximately twice as long (time period 2T) as in the standard mode of operation (time period T) as is shown in Fig. 2.

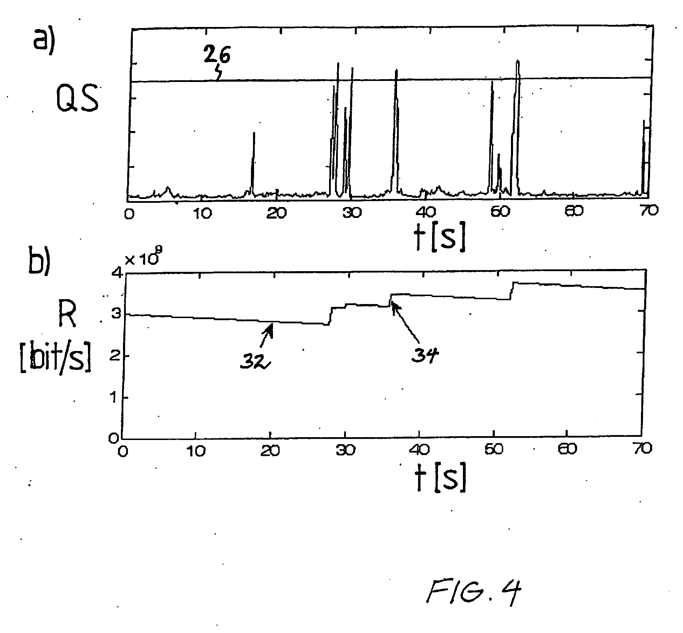

Fig. 4, consisting of parts Fig. 4a and Fig. 4b, shows a buffer filling controlled forecast. Fig. 4a shows a queue filling or queue size QS as a function of time.

In normal operation the output buffer 21 in front of the transmission link is nearly empty in average. However, due to the random packet arrival some short spikes of larger buffer filling occur. The frequency and size of those spikes increases if the utilization ratio is drawing to a limit. Fig. 4b shows the transmission bit rate R as a function of time whereby Figs. 4a and 4b must be seen in combination. As long as the queue size QS shown in Fig. 4a does not exceed the buffer threshold 26 the transmission bit rate R slowly decreases 32 at a negative change rate. Whenever a queue size QS exceeds the transmission threshold 26 the transmission speed increases 34 as a positive change rate.

Fig. 5 shows the required link capacity B (Effective Bandwidth) as a function of mean link load m, normalized to the application stream bit rate $b_x$.

Calculations in this section are done under "worst case" assumptions. In practice, loss probabilities might be lower, e.g. due to a finite number of access users, or due to a noticeable fraction of flows that are, contrary to expectations, short enough for buffers, etc. For the link transmission rate adaptation, however, this does not change a lot, because losses are quite sensitive to link capacity, which can be seen in Fig. 5 where the curves for loss probabilities of $10^{-8}$ (the solid line) and $10^{-3}$ (the dashed line) are close to each other.

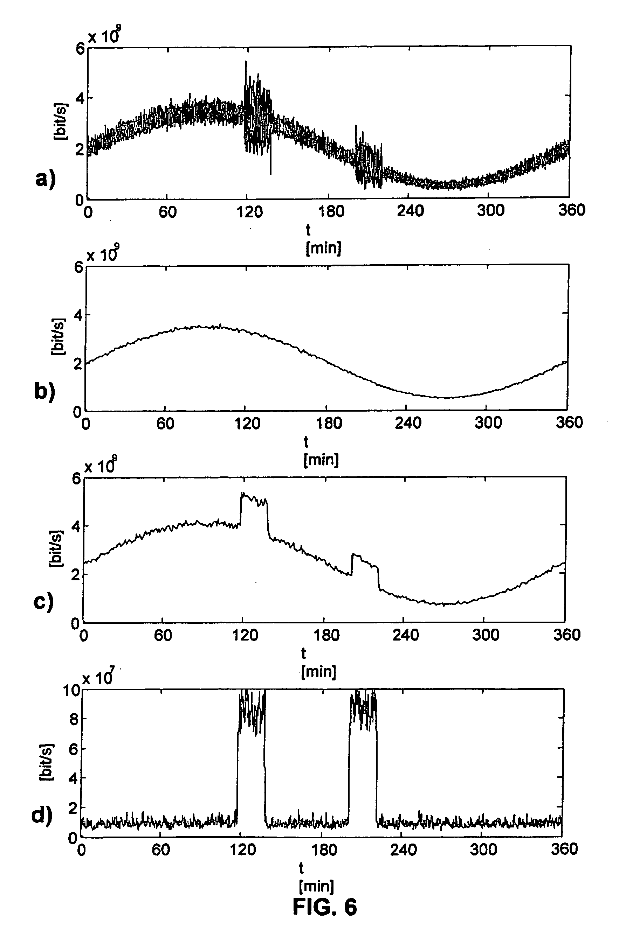

Fig. 6, consisting of parts Fig. 6a to Fig 6d, shows a prototype measurement of an application stream granularity, and derived thereof the Effective Bandwidth, according to an embodiment of the invention. Fig. 6a shows a fluctuating traffic which is a packet traffic on link 8 which fluctuates around the mean load so that it is practically unpredictable. Fig. 6b shows the measurable mean traffic load of the fluctuating traffic shown in Fig. 6a. Fig 6c shows the estimated effective bandwidth curve indicating the transmission rate which is needed to provide sufficient transmission capacity for both the mean load trend and the fluctuating traffic.

Fig. 6d shows an estimated application stream bit rate $b_x$ as a function of time. The Figs. 6a to 6d must be seen in combination.

Reference key

| 2 | sender |
| 4 | receiver |
| 6 | network |
| 8 | link |
| 10 | LLC layer |
| 12 | MAC layer |
| 14 | RCS sub-layer |
| 16 | physical layer |
| 18 | data packet |
| 20 | IDLE |
| 21 | output buffer |
| 22 | rate adaptation unit |
| 23 | sender clock |
| 24 | encapsulation and physical layer adaptation |
| 25 | sending unit |
| 26 | buffer threshold |
| 27 | sender clock control |
| 28 | control unit |
| 28i | input link |
| 28o | output link |
| 32 | decreasing transmission bit rate |
| 34 | increasing transmission bit rate |
| 41 | input buffer |
| 42 | clock recovery |
| 43 | receiver clock |
| 44 | physical layer decoding and packet processing |
| 45 | receiving unit |
| 180 | bit pattern |
| 181 | flag |
| 182 | destination address (= DA) |
| 183 | source address (= SA) |
| 184 | VLAN |
| 185 | type |
| 186 | data |
| 187 | cyclic redundancy check (= CRC) |
| B | effective bandwidth |
| $b_x$ | mean application stream bit rate |
| m | mean traffic load |
| QS | queue size |
| R | transmission bit rate |
| t | time |

**Claims**

**1.**   A method of controlling a packet transmission in a packet switched network (6) via a link (8) between a sender (2) receiving a packet traffic and a receiver (4) at a transmission bit rate (R),
the method comprising the steps of:

predicting a traffic offer to the sender (2) on at least one time scale;
based on an effective bandwidth estimation and/or a queue filling level of an output buffer (21) of the sender (2);
based on the prediction, determining a target transmission bit rate which is adapted to the predicted traffic offer; and
changing the transmission bit rate (R) to the target transmission bit rate at a change rate defined so that a clock recovery (42) of the receiver (4) remains phase-locked to the changing transmission bit rate.

2. The method according to claim 1,
**characterised in**
**that** the prediction of the traffic offer based on the queue filling level comprises:

defining a buffer threshold (26) of the output buffer (21);
monitoring the queue filling level; and
based on the monitored behaviour of the queue filling level in relation to the buffer threshold (26), predicting the traffic offer.

3. The method according to claim 1,
**characterised in**
**that** the method further comprises the steps of:

defining the change rate

a) in case the transmission bit rate (R) is higher than the target transmission bit rate, as a negative change rate so that the target transmission bit rate is reached on a time scale which is longer than typical fluctuations of the traffic load,
or
b) in case the transmission bit rate (R) is lower than the target transmission bit rate, as a positive change rate so that the target transmission bit rate is reached as fast as possible.

4. The method according to claim 3,
**characterised in**
**that** in case a) the target transmission bit rate will be reached on a time scale between 1 s and 30 min, preferably between 5 min and 15 min.

5. The method according to claim 1,
**characterised in**
**that** the target transmission bit rate is determined in a range of between 10 % and 100 %, preferably between 30% and 100%, of the maximum transmission capacity of the link (8).

6. The method according to claim 1,
**characterised in**
**that** the method further comprises the step of:

predicting the traffic offer on a time scale which is compatible with the change rate.

7. The method according to claim 6
**characterized in**
**that** predicting the traffic offer on a time scale which is compatible with the change rate comprises predicting the traffic offer in a sliding way with sufficiently large and smooth averaging windows so that the derived target transmission rate cannot change faster than permitted by the clock recovery of the receiver.

8. The method according to claim 1,
**characterised in**
**that** the method further comprises the step of:

storing packet traffic which temporarily exceeds the actual transmission bit rate (R) in an output buffer (21) of the sender (2) until the transmission bit rate (R) has increased to a level which is sufficient to transmit the exceeding packet traffic.

9. A sender (2) of a packet switched network (6) whereby the sender (2) is adapted to send packets of a received traffic offer at a transmission bit rate (R), the sender (2) comprising a control unit (28) adapted to predict a traffic offer to the sender (2) on at least one time scale; based on an effective bandwidth estimation and/or a queue filling level of an output buffer (21) of the sender (2);
based on the prediction, determine a target transmission bit rate which is adapted to the predicted traffic offer; and change the transmission bit rate (R) to the target transmission bit rate at a change rate defined so that a clock recovery (42) is able to remain phase-locked to the changing transmission bit rate.

10. A computer program product for controlling a packet transmission in a packet switched network (6) via a link (8) between a sender (2) receiving a packet traffic and a receiver (4) at a transmission bit rate (R), whereby the computer program product, when executed by the sender (2), performs the steps of:

predicting a traffic offer to the sender (2) on at least one time scale;
based on an effective bandwidth estimation and/or a queue filling level of an output buffer (21) of the sender (2);
based on the prediction, determining a target transmission bit rate which is adapted to the predicted traffic offer; and
changing the transmission bit rate (R) to the target transmission bit rate at a change rate defined so that a clock recovery (42) of the receiver (4) remains phase-locked to the changing transmission bit rate.

**Patentansprüche**

1. Verfahren zur Steuerung einer Paketübertragung in einem paketvermittelten Netzwerk (6) über eine Verbindung (8) zwischen einem Sender (2), welcher einen Paketverkehr empfängt, und einem Empfänger (4) mit einer Übertragungsbitrate (R), wobei das Verfahren die folgenden Schritte umfasst:

Prognostizieren eines Verkehrsangebots an den Sender (2) auf mindestens einer Zeitskala; basierend auf einer effektiven Bandbreitenschätzung und/oder einem Warteschlangen-Füllstand eines Ausgangspuffers (21) des Senders (2);
basierend auf der Prognose, Bestimmen einer Ziel-Übertragungsbitrate, welche für das prognostizierte Verkehrsangebot geeignet ist; und
Ändern der Übertragungsbitrate (R) in die Ziel-Übertragungsbitrate mit einer derart definierten Änderungsrate, dass die Taktrückgewinnung (42) des Empfängers (4) mit der sich ändernden Übertragungsbitrate phasenverriegelt bleibt.

2. Verfahren nach Anspruch 1,
**dadurch gekennzeichnet,**
**dass** die auf dem Warteschlangen-Füllstand basierende Prognose des Verkehrsangebots umfasst:

Definieren eines Puffer-Grenzwerts (26) des Ausgangspuffers (21);
Überwachen des Warteschlangen-Füllstands; und
basierend auf dem überwachten Verhalten des Warteschlangen-Füllstands in Bezug auf den Puffer-Grenzwert (26), Prognostizieren des Verkehrsangebots.

3. Verfahren nach Anspruch 1,
**dadurch gekennzeichnet**,
wobei das Verfahren die folgenden Schritte umfasst:

Definieren der Änderungsrate

a) wenn die Übertragungsbitrate (R) höher als die Ziel-Übertragungsbitrate ist, als eine negative Änderungsrate, so dass die Ziel-Übertragungsbitrate auf einer Zeitskala, welche länger als die typischen Schwankungen der Verkehrslast ist, erreicht wird,
oder

b) wenn die Übertragungsbitrate (R) niedriger als die Ziel-Übertragungsbitrate ist, als eine positive Änderungsrate, so dass die Ziel-Übertragungsbitrate so schnell wie möglich erreicht wird.

4. Verfahren nach Anspruch 3,
**dadurch gekennzeichnet,**
**dass** im Fall a) die Ziel-Übertragungsbitrate auf einer Zeitskala zwischen 1 s und 30 min, vorzugsweise zwischen 5 min und 15 min, erreicht wird.

5. Verfahren nach Anspruch 1,
**dadurch gekennzeichnet,**
**dass** die Ziel-Übertragungsbitrate in einem Bereich zwischen 10 % und 100 %, vorzugsweise zwischen 30 % und 100 %, der maximalen Übertragungskapazität der Verbindung (8) bestimmt wird.

6. Verfahren nach Anspruch 1,
**dadurch gekennzeichnet,**
**dass** das Verfahren weiterhin den folgenden Schritt umfasst:

Prognostizieren des Verkehrsangebots auf einer Zeitskala, welche mit der Änderungsrate kompatibel ist.

7. Verfahren nach Anspruch 6
**dadurch gekennzeichnet,**
**dass** die Prognose des Verkehrsangebots auf einer Zeitskala, welche mit der Änderungsrate kompatibel ist, das Prognostizieren des Verkehrsangebots auf gleitende Weise mit ausreichend großen und glatten Mittelungsfenstern umfasst, so dass sich die abgeleitete Ziel-Übertragungsrate nicht schneller als von der Taktrückgewinnung des Empfängers zugelassen ändern kann.

8. Verfahren nach Anspruch 1,
**dadurch gekennzeichnet,**
**dass** das Verfahren weiterhin den folgenden Schritt umfasst:

Speichern des Paketverkehrs, welcher vorübergehend die aktuelle Übertragungsbitrate (R) überschreitet, in einem Ausgangspuffer (21) des Senders (2), bis die sich die Übertragungsbitrate (R) auf einen Pegel erhöht hat, der für die Übertragung des übersteigenden Paketverkehrs ausreicht.

9. Sender (2) eines paketvermittelten Netzwerks (6), wobei der Sender (2) dazu ausgelegt ist, Pakete eines empfangenen Verkehrsangebots mit einer Übertragungsbitrate (R) zu senden, wobei der Sender (2) eine Steuereinheit (28) umfasst, welche dazu ausgelegt ist, basierend auf einer effektiven Bandbreitenschätzung und/oder einem Warteschlangen-Füllstand eines Ausgangspuffers (21) des Senders (2) ein Verkehrsangebot an den Sender (2) auf mindestens einer Zeitskala zu prognostizieren;
basierend auf der Prognose, eine Ziel-Übertragungsbitrate, welche für das prognostizierte Verkehrsangebot geeignet ist, zu bestimmen; und
die Übertragungsbitrate (R) in die Ziel-Übertragungsbitrate mit einer derart definierten Änderungsrate zu ändern, dass eine Taktrückgewinnung (42) fähig ist, mit der sich ändernden Übertragungsbitrate phasenverriegelt zu bleiben.

10. Computerprogramm-Produkt zur Steuerung einer Paketübertragung in einem paketvermittelten Netzwerk (6) über eine Verbindung (8) zwischen einem Sender (2), welcher einen Paketverkehr empfängt, und einem Empfänger (4) mit einer Übertragungsbitrate (R), wobei das Computerprodukt-Programm bei dessen Ausführung durch den Sender (2) die folgenden Schritte durchführt:

Prognostizieren eines Verkehrsangebots an den Sender (2) auf mindestens einer Zeitskala, basierend auf einer effektiven Bandbreitenschätzung und/oder einem Warteschlangen-Füllstand eines Ausgangspuffers (21) des Senders (2);
basierend auf der Prognose, Bestimmen einer Ziel-Übertragungsbitrate, welche für das prognostizierte Verkehrsangebot geeignet ist; und
Ändern der Übertragungsbitrate (R) in die Ziel-Übertragungsbitrate mit einer derart definierten Änderungsrate, dass die Taktrückgewinnung (42) des Empfängers (4) mit der sich ändernden Übertragungsbitrate phasenverriegelt bleibt.

**Revendications**

1. Procédé de commande d'une transmission de paquets dans un réseau à commutation de paquets (6) par l'intermédiaire d'une liaison (8) entre un dispositif émetteur (2) recevant un trafic de paquets et un dispositif récepteur (4) à un débit binaire de transmission (R), le procédé comprenant les étapes suivantes :

   prévoir une offre de trafic pour le dispositif émetteur (2) sur au moins une échelle de temps ; sur la base d'une estimation de largeur de bande effective et/ou d'un niveau de remplissage de file d'attente d'un tampon de sortie (21) de dispositif émetteur (2) ;
   sur la base de la prévision, déterminer un débit binaire de transmission cible qui est adapté à l'offre de trafic prévue ; et
   changer le débit binaire de transmission (R) pour le débit binaire de transmission cible selon un taux de changement défini de sorte qu'une récupération d'horloge (42) du dispositif récepteur (4) reste verrouillée en phase sur le débit binaire de transmission changeant.

2. Procédé selon la revendication 1,
   **caractérisé en ce que**
   la prévision de l'offre de trafic sur la base du niveau de remplissage de file d'attente comprend les étapes suivantes :

   définir un seuil de tampon (26) du tampon de sortie (21) ;
   surveiller le niveau de remplissage de file d'attente ; et
   sur la base du comportement surveillé du niveau de remplissage de file d'attente par rapport au seuil de tampon (26), prévoir l'offre de trafic.

3. Procédé selon la revendication 1,
   **caractérisé en ce que**
   le procédé comprend en outre l'étape suivante :

   définir le taux de changement

      a) dans le cas où le débit binaire de transmission (R) est supérieur au débit binaire de transmission cible, comme taux de changement négatif de sorte que le débit binaire de transmission cible soit atteint sur une échelle de temps qui est plus longue que des fluctuations caractéristiques de la charge de trafic, ou
      b) dans le cas où le débit binaire de transmission (R) est inférieur au débit binaire de transmission cible, comme taux de changement positif de sorte que le débit binaire de transmission cible soit atteint le plus vite possible.

4. Procédé selon la revendication 3,
   **caractérisé en ce que**
   dans le cas a) le débit binaire de transmission cible sera atteint sur une échelle de temps comprise entre 1 s et 30 min, de préférence entre 5 min et 15 min.

5. Procédé selon la revendication 1,
   **caractérisé en ce que**
   le débit binaire de transmission cible est déterminé dans une plage comprise entre 10 % et 100 %, de préférence entre 30 % et 100 %, de la capacité de transmission maximale de la liaison (8).

6. Procédé selon la revendication 1,
   **caractérisé en ce que**
   le procédé comprend en outre l'étape suivante :

   prévoir l'offre de trafic sur une échelle de temps qui est compatible avec le taux de changement.

7. Procédé selon la revendication 6,
   **caractérisé en ce que**
   la prévision de l'offre de trafic sur une échelle de temps qui est compatible avec le taux de changement comprend la prévision de l'offre de trafic de manière mobile avec des fenêtres de pondération suffisamment grandes et lisses afin que le débit de transmission cible dérivé ne puisse pas changer plus vite que ne le permet la récupération d'horloge du dispositif récepteur.

8. Procédé selon la revendication 1,
**caractérisé en ce que**
le procédé comprend en outre l'étape suivante :

stocker un trafic de paquets qui dépasse temporairement le débit binaire de transmission (R) réel dans un tampon de sortie (21) de dispositif émetteur (2) jusqu'à ce que le débit binaire de transmission (R) atteigne un niveau qui est suffisant pour transmettre le trafic de paquets qui dépasse.

9. Dispositif émetteur (2) d'un réseau à commutation de paquets (6), le dispositif émetteur (2) étant adapté pour envoyer des paquets d'une offre de trafic reçue à un débit binaire de transmission (R), le dispositif émetteur (2) comprenant une unité de commande (28) adaptée pour prévoir une offre de trafic pour le dispositif émetteur (2) sur au moins une échelle de temps ; sur la base d'une estimation de largeur de bande effective et/ou d'un niveau de remplissage de file d'attente d'un tampon de sortie (21) de dispositif émetteur (2) ;
sur la base de la prévision, pour déterminer un débit binaire de transmission cible qui est adapté à l'offre de trafic prévue ; et
pour changer le débit binaire de transmission (R) pour le débit binaire de transmission cible selon un taux de changement défini de sorte qu'une récupération d'horloge (42) puisse rester verrouillée en phase sur le débit binaire de transmission changeant.

10. Produit de programme informatique pour commander une transmission de paquets dans un réseau à commutation de paquets (6) par l'intermédiaire d'une liaison (8) entre un dispositif émetteur (2) recevant un trafic de paquets et un dispositif récepteur (4) à un débit binaire de transmission (R), le produit de programme informatique, lorsqu'il est exécuté par le dispositif émetteur (2), exécutant les étapes suivantes :

prévoir une offre de trafic pour le dispositif émetteur (2) sur au moins une échelle de temps ; sur la base d'une estimation de largeur de bande effective et/ou d'un niveau de remplissage de file d'attente d'un tampon de sortie (21) de dispositif émetteur (2) ;
sur la base de la prévision, déterminer un débit binaire de transmission cible qui est adapté à l'offre de trafic prévue ; et
changer le débit binaire de transmission (R) pour le débit binaire de transmission cible selon un taux de changement défini de sorte qu'une récupération d'horloge (42) du dispositif récepteur (4) reste verrouillée en phase sur le débit binaire de transmission changeant.

FIG. 1

FIG. 2

FIG. 3

FIG. 4

FIG.5

**FIG. 6**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 20090296670 A

### Non-patent literature cited in the description

- **W. LAUTENSCHLAGER ; W. FROHBERG.** Bandwidth Dimensioning in Packet-based Aggregation Networks. *The 13th International Telecommunications Network Strategy and Planning Symposium 2008 (short: Networks 2008,* 28 September 2008, IS-BN 978-963-8111-68-5, 1-18

- From the ITU/ITC Teletraffic Engineering Handbook. ITU-D Study Group 2. March 2004